# EUROPEAN PATENT APPLICATION

(11) **EP 1 550 941 A1**
(43) Date of publication of application: **06.07.2005**
(21) Application number: 04290006.8
(22) Date of filing: 05.01.2004
(51) Int. Cl.: G06F 3/033

(54) **Object selection method and a related object selection device**

(71) Applicant: ALCATEL, 75008 Paris (FR)
(72) Inventor: Baekeland, Rony Alfons Maria, 2000 Antwerp (BE); Handekyn, Koen, 9000 Gent (BE)
(74) Representative: Narmon, Gisèle Marie Thérèse

(57) **Abstract**

The present invention relates to an object selection method and an object selection device for selecting an object of a plurality of objects displayed at a displaying part. This method first comprises the step of detecting a user selection of an object of a plurality of objects. Subsequently the object selection device selects the object of the plurality of objects based on the user selection. The detecting of the user selection of the object is based on a position of a pointer relative to the displaying part.

## Description

The present invention relates to an object selection method as described in the preamble of claim 1 and to an object selection device as described in the preamble of claim 2.

Such an object selection method and related device are generally known in the art and often is included in mobile user terminals such as cellular telephones or a Personal Digital Assistant. These mobile user terminals usually are provided with a touch sensitive input device, such as a touch-sensitive display. This display may show a plurality of symbols together in this way constituting a virtual keyboard. A user may select any of these symbols of this virtual keyboard by touching the screen at the location of the displayed symbol by finger or using a pointing device like a pencil.

Because of the relatively small size of a telephone display, there is generally not enough space on the display to depict all the symbols available to the user for the operation of the mobile user terminal and hence the entire set may be divided into different subsets of symbols. Each subset then is presentable in a sub-screen. In this case the selection process is time-inefficient because of possibly switching between the subsets of symbols each presented at a different sub-screen.

On the other hand, if all symbols available to the user for the operation of the mobile user terminal are depicted at the surface of the display at the same time, the size of each symbol is that small that is awkward to select such a symbol using a finger or a pointing device such as a pencil. Due to the size of the symbol and the spacing of the symbols a finger may cover several adjacent symbols.

An object of the present invention is to provide an object selection method and a object selection device of the above known type but wherein the selection of objects displayed is facilitated and it is enabled to select in a faster and more accurate way objects from a screen using a pointer.

According to the invention, this object is achieved by the object selection method as described in claim 1 and the object selection device as described in claim 2.

Indeed, by using a detection part that is able to detect the selection of an object based on a position of a pointer relative to the displaying part, the object is selected by determining the object that is displayed at the displaying part closest to the pointing device.

By pointing at an object presented at the displaying part a selection is made and fedback at the displaying part by presenting the currently selected object at the displaying part. In this way there is an early feedback of selection which as a consequence can be corrected in an early stage. Such an object may be a menu-choice, a datakey, a fixed area of the screen, an icon , graphic, picture, avatar a 3D, 2D representation. An object can also be a set of multiple objects.

An additional characteristic feature of the present invention is described in claim 3.

By the selection of an object it is subsequently magnified, the selected object can be selected even more conveniently. An object may represent a plurality of sub-functions that now can be selected more precisely because of the magnified presentation of the object.

An additional feature of the present invention is described in claim 4.

The detecting part comprises a signal sending part for sending a signal towards a the pointing device and a plurality of signal detectors near the displaying part DP for detecting a reflection of the signal reflected by the pointing device.

An additional feature of the present invention is described in claim 5.

The Object selection device may be implemented in a user terminal such as a mobile phone a personal digital assistant a television or a computer screen.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

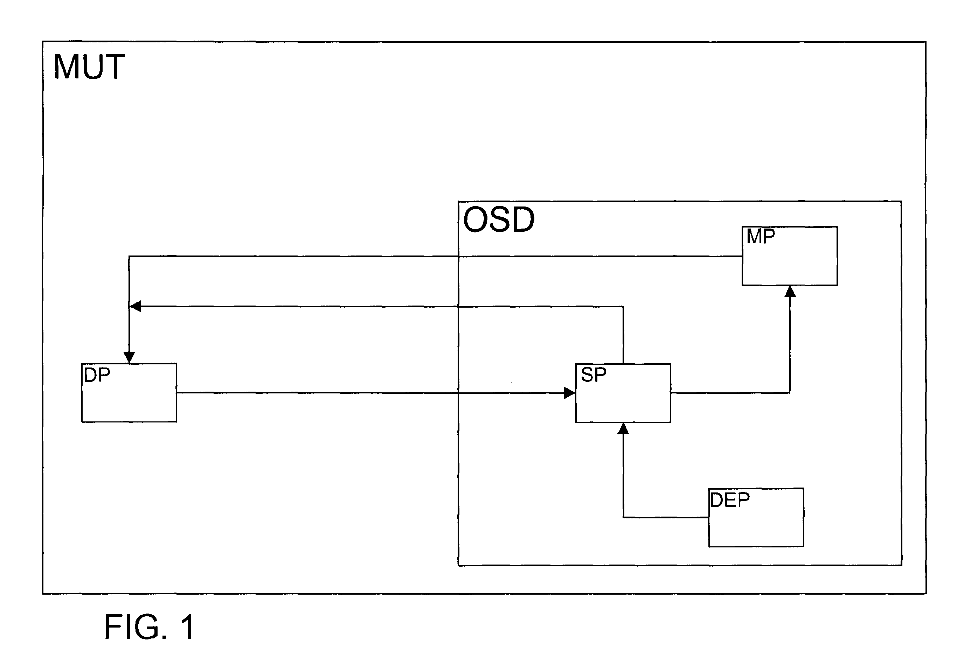

FIG. 1 represents a functional built-up of a mobile user terminal including the object selection device of the present invention.

In the following paragraphs, referring to the drawings, an implementation of the object selection method and the related object selection device according to the present invention will be described. In the first paragraph of this description the main elements of the object selection device as presented in FIG. 1 are described. In the second paragraph, all connections between the before mentioned elements and described means are defined. In the succeeding paragraph the actual execution of the method for session establishment is described.

The object selection device OSD for instance is included in a mobile user terminal MUT like a mobile phone, a personal digital assistant. Alternatively, the object selection device OSD may be included in other user terminals such as a television, or a computer screen or even a watch. The mobile user terminal further comprises a displaying part for displaying object such as virtual data-keys, menu-options, an area of the screen, an icon, graphic, picture, avatar a 3D, 2D representations. An object can also be a set of multiple objects. This display here is assumed to be a Liquid Crystal Display further referred to as a LCD. Alternatively every kind of display can be used: plasma, CRT, flat panel display or flat surface or even a projected image may be used, because the touch can be detected by the object selection device. This object selection device OSD for selecting an object of a plurality of objects displayed at the displaying part DP comprises a detecting part DEP that is adapted to detect a user selection of an object of a plurality of objects presented at the displaying part DP. This detection of the user selection of the object is based on the position of a pointer relative to the displaying part.

The object selection device OSD additionally comprises a selecting part SP that is able to select an object of the plurality of objects, based on the user selection and a magnification part MP, that is adapted to magnify the selected object at the displaying part.

Additionally, the mobile user terminal MUT comprises a processing part (not presented in FIG.1) for processing the selected object, i.e. executing a selected menu-choice, adding a selected alphanumeric character represented by a data-key in a currently processed document or selecting an icon from a number of icons, each representing an application that at selection may be run at the mobile user terminal MUT.

The detecting part DEP is further coupled with an output to an input of the selecting part SP that in turn is coupled with an output to an input of the magnification part MP. The selecting part SP further is coupled with an output to an input of the displaying part DP and with an additional output to an input of the processing part. The magnification part MP further is coupled with an output to an input of the displaying part DP. The displaying part DP further is coupled with an output to an input of the selecting part SP.

In order to explain the operation of the present invention it is assumed that the displaying part of the mobile user terminal MUT displays a number of icons, each representing an application that at selection may be run at the mobile user terminal MUT. The execution of the applications then is executed under control of the processing part.

It is further assumed that the detection part in this embodiment consists of a signal detector at each corner of the square displaying part and a signalling source near the displaying part for sending/receiving a signal, e.g. a bluetooth signal, an infrared signal (see http://www.acroname.com/robotics/info/articles/ sharp/sharp.html), a radar signal from/to the pointing device.

The signal sent by the signalling source then is reflected by a pointing device or the pointing device sends the signal to the signal detection sensors of the screen, e.g. a pencil or even a finger and detected by the signal detectors at the corners of the displaying part. Based on the reflection of the signal, the selection device is able to determine the position of the pointing device relative to the displaying part.

Subsequently the selecting part SP is able to select the icon the pointer is pointing at, using the position of the pointer relative to the displaying part DP. The icon pointed at for instance can be determined by using a table or dynamic lists of objects created within the application, where the application can be an operating system, or an application running on top of an operating system.

The selecting part SP further displays the current selection on the screen by highlighting the selected icon and/or may forward this selection towards the processing part that subsequently or at the same time start executing the application corresponding to the selected icon.

Alternatively the selecting part SP may forward the selected icon towards the magnification part MP, that subsequently magnifies the selected icon and presents the icon magnified at the displaying part.

The processing part may start the execution of the application corresponding to the selected icon and magnified after elapsing of a predetermined time interval or after the actual touching of the magnified icon at the displaying part by the pointing device.

In fact the final confirmation of the selected object may alternatively be done also at a certain distance e.g. if someone want to make a selection of an object on a television screen he may be first enlarging some objects by coming nearer to the screen and then when he approaches the TV-screen at e.g. 1 meter the selection of the object is confirmed.

An alternative implementation of the selecting part may be infrared sensors at the corners of the displaying part and an infrared source at the top of the pointing device. Instead of an infrared signalling source any suitable signalling source such as a bluetooth signalling source or radar technology can be used also, microwave probes, depending of the application for which we want to use the invention may be used.

It is to be remarked that the number of sensors determines the accuracy of the measurement for determining the position of the pointing device relative to the displaying part. Using more than four sensors increases the accuracy of the measurement and using less sensors decreases the accuracy of the measurements.

It is further to be remarked that different methods exist for detecting the pointing device. Most of them are using some form of radiation: infrared, radar signals, microwaves or whatever. These methods can consist out of the signal source and an object reflecting the signal. In the embodiment we assume that the pointing device is reflecting the radiation, but the pointing device could as well be a pen sending out radiations to the different signal detectors in the neighbourhood, which can capture it and calculate the distance using triangulations methods.

It is a further remark that the detecting part comprises a signal sending part for sending a signal towards the pointing device, if the position of the signal sending device is not in a fixed position to the screen, the screen itself can be detected by the signal sending device and the relative positions of the pointing device towards the screen can then be calculated. If the signal sending part is in a fixed position to the screen only the position of the pointing device needs to be established.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Object selection method for selecting an object of a plurality of objects displayed at a displaying part, said method comprising the following steps:
a. detecting a user selection of an object of said plurality of objects;
b. selecting, said object of said plurality of objects based on said user selection, **CHARACTERIZED IN THAT** said step of detecting said user selection of said object based on a position of a pointer relative to said displaying part.

2. Object selection device (OSD) for selecting an object of a plurality of objects displayed at a displaying part (DP) said device further comprising the following parts:
a. detecting part (DEP), adapted to detect a user selection of an object of said plurality of objects;
b. selecting part (SP), adapted to select said object of said plurality of objects based on said user selection, **CHARACTERIZED IN THAT** said detection part (DEP), is further adapted to detect said user selection of said object based on a position of a pointer relative to said displaying part.

3. Object selection device (OSD) according to claim 1, **CHARACTERIZED IN THAT** said Object selection device (OSD) further comprises a magnification part (MP), adapted to magnify said selected object.

4. Object selection device (OSD) according to claim 2 or 3, **CHARACTERIZED IN THAT** said detecting part (DEP), comprises a signal sending part for sending a signal towards a said pointing device and a plurality of signal detectors near said displaying part (DP) for detecting a reflection of said signal reflected by said pointing device.

5. user terminal comprising the Object selection device (OSD) according to any of claim 2 to claim 4.
